Europäisches Patentamt

**European Patent Office**

Office européen des brevets

(11) Numéro de publication: **0 104 960**
**B1**

# (12) FASCICULE DE BREVET EUROPEEN

(19)

(45) Date de publication du fascicule du brevet:
**23.04.86**

(21) Numéro de dépôt: **83401484.7**

(22) Date de dépôt: **19.07.83**

(51) Int. Cl.⁴: **G 02 B 3/14**, G 02 B 17/00,
G 02 F 1/01

(54) **Optique bifocale et son utilisation dans un appareil détecteur d'images vidéofréquence.**

(30) Priorité: **30.07.82 FR 8213352**

(43) Date de publication de la demande:
**04.04.84 Bulletin 84/14**

(45) Mention de la délivrance du brevet:
**23.04.86 Bulletin 86/17**

(84) Etats contractants désignés:
**BE DE GB**

(56) Documents cités:
**EP - A - 0 050 555**
**FR - A - 2 421 394**
**FR - A - 2 425 085**

**JAPANESE JOURNAL OF APPLIED PHYSICS, vol. 18, no. 9, septembre 1979, pages 1679-1684 S. SATO: "Liquid-crystal lens-cells with variable focal length"**

(73) Titulaire: **THOMSON-CSF, 173, Boulevard Haussmann, F-75379 Paris Cedex 08 (FR)**

(72) Inventeur: **Emmanuelli, Yves-Antoine, Thomson-CSF SCPI 173, bld Haussmann, F-75379 Paris Cedex 08 (FR)**
Inventeur: **Pepin, Christian, Thomson-CSF SCPI 173, bld Haussmann, F-75379 Paris Cedex 08 (FR)**

(74) Mandataire: **Trocellier, Roger et al, THOMSON-CSF SCPI 19, avenue de Messine, F-75008 Paris (FR)**

## Description

La présente invention concerne une optique bifocale et son utilisation dans un appareil détecteur d'images vidéofréquence. L'invention s'applique dans le secteur optronique, à des dispositifs de prise de vues télévision, infrarouge ou autres, utilisés dans le domaine militaire (missile, guidage, autodirecteur) ou civil (télévision, photographie, etc.).

Lorsque l'on veut réaliser un objectif bifocal, c'est-à-dire qui présente deux champs d'observation différents, le cas peut se présenter par exemple pour un système de guidage de missile, le grand champ servant à la détection de la cible et le petit champ au pointage fin sur cette cible, la technique conventionnelle met en oeuvre des solutions de type dynamique, c'est-à-dire avec des mouvements d'organes ou de pièces. Une première solution connue consiste à avoir un ensemble en ligne, ou replié à l'aide de miroirs pour des raisons d'encombrement, avec un dispositif de permutation des objectifs pour passer d'un fonctionnement petit champ à un fonctionnement grand champ, ou l'inverse.

Selon une autre solution connue, les deux objectifs utilisent des pupilles d'entrée distinctes et un prisme mélangeur permet de former chaque image au niveau d'un plan détecteur. Il suffit dans cette version de basculer un obturateur sur une voie ou sur l'autre pour sélectionner le petit champ ou le grand champ.

Ces solutions présentent divers inconvénients qui sont essentiellement, pour la première solution rappelée: la nécessité de déplacer des objectifs ce qui exige des mécanismes de précision, des moteurs relativement puissants pour obtenir une commutation en un temps court; en outre, cette solution n'est guère utilisable sur un autodirecteur de missile à effet gryscopique direct à cause du déplacement des masses mécaniques importantes. Pour la seconde solution les inconvénients majeurs résultent en ce que: les deux pupilles sont différentes ce qui nécessite un hublot de grande taille, le volume de l'ensemble est important à cause du mélange optique à réaliser dans le prisme, le dispositif nécessite un moteur ou un électro-aimant pour commander l'obturation sur une voie ou sur l'autre, et n'est donc guère exploitable dans un autodirecteur, il faut également signaler une perte de moitié du flux dans le prisme mélangeur.

Il est connu par le document de brevet FR-A-2 425 085 un objectif à longueur focale variable constitué de deux miroirs courbes de même axe optique, un premier miroir pour recevoir le rayonnement lumineux d'un objet lumineux et former une image inversée et un deuxième miroir pour former une image droite finale de cette image inversée. Chacun de ces miroirs est à longueur focale variable, étant réalisé à l'aide d'un bilame avec un élément piézo-électrique, une face du bilame portant la surface réfléchissante formant miroir. Le bilame est alimenté par une source de tension continue. Cette tension de commande est réglée de façon continue. En faisant varier la tension on modifie la courbure du miroir correspondant. Cet effet est utilisé pour modifier le grandissement transversal de chacun des miroirs et pour obtenir un grandissement global désiré. L'ensemble constitue ainsi un objectif Zoom. Le premier miroir est percé dans sa partie axiale pour laisser passer le rayonnement réfléchi par le deuxième miroir et permettre la formation de l'image.

Il est connu par ailleurs, par le document de brevet EP-A-0 050 555 une épissure pour des fibres optiques, constituée d'un embout transparent ayant une cavité cylindrique pour recevoir les extrémités de deux fibres optiques et une surface d'extrémité sphérique équipée d'une cellule électrolytique. Une électrode de la cellule recouvre la surface l'extrémité. Par une commande électrique de tension de signe approprié un dépôt réfléchissant est formé sur cette électrode et en inversant le signe du signal de commande le dépôt est dissout restituant la transparence de la cellule.

L'invention a pour but de remédier aux inconvénients signalés en utilisant, telles ou adaptées, certaines des techniques signalées en dernier lieu pour réaliser une optique bifocale statique, c'est-à-dire sans aucun équipage mécanique mobile, et particulièrement apte à une utilisation sur un autodirecteur de missile stabilisé par effet gyroscopique direct. On entend par effet gyroscopique direct le montage dans lequel l'axe de rotation de la toupie correspond à l'axe de l'image sur la caméra ou le détecteur d'images. L'optique bifocale statique selon l'invention est particulièrement adaptée à cette utilisation car elle ne nécessite pas de modifications d'équilibrage. En outre, comparée à l'art antérieur précité, l'invention est réalisable avec une optique plus simple et plus compacte ce qui entraîne un gain de volume, de poids et une diminution de coût.

Selon l'invention ce but est atteint par les caractéristiques figurant dans la rivendication 1.

Les particularités et avantages de la présente invention ressortiront de la description qui suit donnée à titre d'exemple non limitatif à l'aide des figures annexées qui représentent:

fig. 1, un schéma d'une optique bifocale conforme à l'invention;

fig. 2, un schéma d'une variante de réalisation d'une optique bifocale conforme à l'invention;

figs. 3a, 3b et 3c, des variantes de réalisation de la cellule électrolytique utilisée dans une optique bifocale selon l'invention;

fig. 4, un schéma relatif à une réalisation d'un appareil détecteur d'images vidéofréquence utilisant une optique bifocale conforme à l'invention dans une version gyrostabilisée;

figs. 5 et 6, des schémas de détail relatifs à la réalisation du système optique de focalisation et d'atténuation utilisé dans l'appareil selon la version fig. 4.

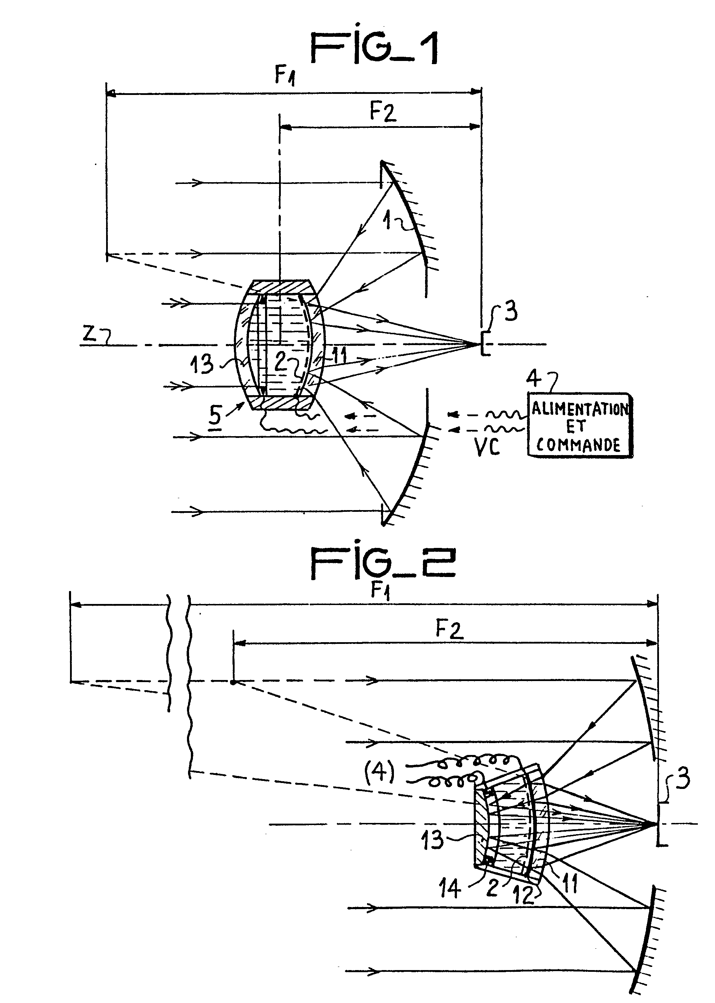

En se reportant à la fig. 1, l'optique bifocale comporte un montage du type Cassegrain avec un miroir principal 1 et un miroir secondaire 2 pour focaliser le rayonnement de réception sur un plan de photoréception 3, par exemple celui d'un détecteur. Le miroir principal est réalisé de manière conventionnelle sous forme d'un miroir concave 1 qui réfléchit le rayonnement incident vers le miroir secondaire 2. Le miroir secondaire 2 est réalisé au moyen d'une cuve électrolytique particulière et est constitué par le dépôt métallique 2 formé dans la cuve par application d'une tension continue VC d'alimentation. Cette tension est produite par un circuit d'alimentation et de commande 4. La cuve est utilisée en tout ou rien, c'est-à-dire, que sur application d'une tension continue VC, de sens et d'amplitude déterminés il se produit un dépôt métallique 2 jouant le rôle de réflecteur optique et sur application d'une tension de signe inverse on produit la dissolution du dépôt. Le passage de la cuve électrolytique dans l'un ou l'autre de ces deux états s'effectue rapidement, en une fraction de seconde, sous l'effet du courrant continu polarisé en conséquence.

La structure de la cellule électrolytique 5 va maintenant être rappelée dans ce qui suit à l'aide de la fig. 5 qui montre les détails. La cellule comporte un électrolyte 10 comprenant des ions métalliques et qui est intercalé entre une première paroi 11 revêtue d'une première couche conductrice transparente 12 formant électrode et une seconde paroi 13 associée à une contre-électrode 14 qui a une forme en anneau pour permettre le passage du rayonnement lumineux et autoriser le fonctionnement bifocale comme on le verra ultérieurement. Les moyens d'alimentation électrique 4 en courant continu sont connectés aux bornes des électrodes 12 et 14 pour provoquer le dépôt ou la dissolution, par réaction électrochimique à partir des ions, d'une couche métallique 2 sur l'électrode transparente 12. La première paroi 11 est transparente de même que l'électrode 12 pour laisser passer le rayonnement R1 réfléchi par le miroir concave 1. Pour un sens donné de branchement de la source continue en 4, les ions métalliques, par exemple de l'argent, contenus dans l'électrolyte 10 vont se déposer sur l'électrode transparente 12 qui peut être à base d'oxyde d'étain ou d'indium, pour former le dépôt métallique 2. Par contre, si le branchement est inversé, la couche métallique 2 se dissout et le métal se dépose alors sur la contre-électrode 14.

La version de la fig. 1 ou de la fig. 5 est relative à une utilisation par réflexion de la cuve 5 dans un premier état de fonctionnement et par transmission dans le second état de fonctionnement. A cette titre, la deuxième paroi 13 est également transparente pour laisser passer le rayonnement lumineux incident R2 dans ce deuxième état, la contre-électrode 14 étant de forme annulaire ne perturbe pas le passage de ce rayonnement, ni le dépôt métallique 2 qui est dissout dans ce deuxième état de fonctionnement. Dans l'état petit champ correspondant à l'optique de focale F1 formée par le montage Cassegrain 1-2, la face postérieure de la cuve 5 est réfléchissante grâce à la présence du dépôt électrolytique, cette face a une forme convexe. L'optique, dans ce cas, est comparable à un Cassegrain dont le secondaire est un miroir de Mangin. Dans l'état grand champ, on a une optique de focale F2 inférieure à F1; la cuve est totalement transparente, le dépôt électrolytique sur la face postérieure a été dissout par l'électrolyte sous l'action du courant. Moyennant des formes courbes données aux parois au moins à l'une d'entre elles, la cuve est équivalente et une optique dioptrique de focale plus faible que celle de l'optique Cassegrain précédente avec formation d'image dans le même plan de détection 3.

Dans cette configuration, on peut avoir une superposition dans le plan de détection de l'image grand champ avec une image parasite petit champ dûe à la réflexion R3 des rayons R1 sur la face arrière de la cuve, c'est-à-dire la face à droite sur la figure. En pratique, avec des traitements anti-reflets performants sur cette face arrière de la paroi 11, l'image parasite peut avoir une intensité inférieure au centième à celle de l'image grand champ ce qui reste acceptable dans la majorité des cas.

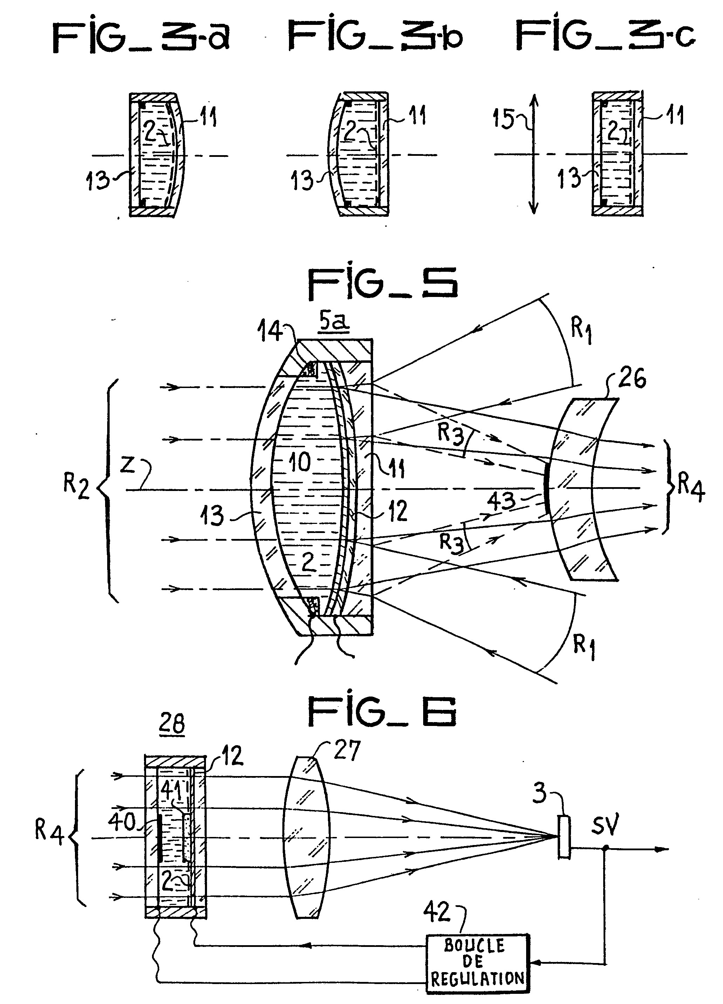

La fig. 2 représente une variante de réalisation de l'optique bifocale suivant laquelle la paroi 13 de la cuve est opaque et sa face interne en contact avec l'électrolyte est traitée réfléchissante pour renvoyer le rayonnement par réflexion. Dans cette variante on réalise un montage Cassegrain dans les deux états de fonctionnement. Les deux champs sont obtenus en imposant la réflexion des rayons soit sur le dioptre constitué par le dépôt métallique 2 lorsque celui-ci existe, soit sur le dioptre constitué sur la face réfléchissante de la paroi 13 lorsque le dépôt 2 est inexistant. Le premier dioptre est composé par le dépôt 2 sur l'électrode transparente 12 de forme courbe, le deuxième dioptre est constitué par le miroir convexe de la face correspondante de la paroi 13. L'électrode annulaire 14 est disposée à proximité de ce deuxième dioptre. Dans le premier état de fonctionnement on obtient une focale F2 correspondant au fonctionnement en grand champ. Dans l'autre état de fonctionnement (réflexion sur la paroi 13) la focale F1 est plus grande et correspond au fonctionnement en petit champ.

La solution selon la fig. 1 conserve un éclairement égal de l'image pour les deux champs ce qui permet son application à l'imagerie d'objets ou de scènes étendus. La solution selon la fig. 2 par contre, permet de conserver un flux reçu d'un point à l'infini égal pour les deux champs et s'appliquera donc de préférence à la détection de points lumineux (traceur de missile, images d'étoiles en astronomie, etc.).

La remarque précédente concernant la formation d'une image parasite reste valable et pourra être traitée de la même façon avec la différence que dans ce cas c'est en petit champ que se forme l'image parasite à l'inverse du cas précédent.

Les figs. 3a, 3b et 3c montrent à titre d'exemples quelques variantes possibles de la cuve à électrolyte utilisables dans une optique bifocale selon la fig. 1. Dans les cas fig. 3a et fig. 3b l'une des parois est courbe tandis que l'autre est plane. L'électrode 12 n'est pas figurée par souci de simplification. Ces deux versions sont applicables également à la variante selon la fig. 2 en utilisant une paroi 13 opaque et réfléchissante pour sa face en contact avec l'électrolyte. Dans la version fig. 3c on utilise une cuve électrolytique de forme simple étant donné que les parois sont des faces planes parallèles; par contre, la focalisation du faisceau est obtenue par adjonction d'une optique additionnelle 15 en amont ou en aval de la cellule.

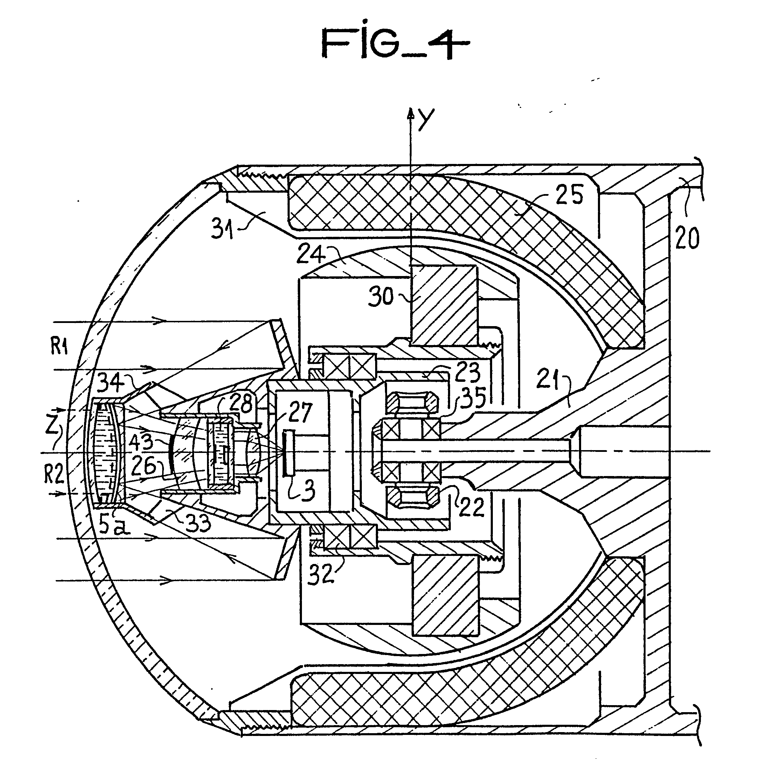

L'utilisation de l'optique bifocale est plus particulièrement envisagée pour un appareil détecteur d'images vidéofréquence d'un type pouvant constituer un autodirecteur télévision et de préférence en version gyroscopée. La fig. 4 est destinée à représenter une telle utilisation. Dans un appareil détecteur d'images vidéofréquence, l'image de la scène observée est formée par l'optique réceptrice sur la surface photosensible d'un dispositif détecteur. Ce dernier, dans une version autodirecteur est fréquemment constitué par un circuit solide du genre dispositif à transfert de charges, ou bien par un tube de prise de vues de petite dimension dont la cible est à base de silicium. Ces détecteurs présentent un inconvénient en ce que leur sensibilité reste constante mais dans une plage très limitée. Pour accroître la dynamique des détecteurs il y a lieu de prévoir un dispositif de correction automatique de sensibilité. Une solution avantageuse consiste à utiliser un montage avec atténuateur optique à cellule électrolytique, de préférence à un diaphragme à pales, en sorte d'avoir un organe statique sans pièces en mouvement. La fig. 6 de détail représente les moyens d'atténuation optique 28 et de commande 42.

L'optique bifocale selon l'invention est montée sur une suspension gyrostabilisée. L'optique bifocale réceptrice, le dispositif détecteur et le dispositif atténuateur variable sont suspendus à la Cardan selon un montage gyroscope libre représenté à toupie extérieure. La suspension à deux degrés de liberté est identifiable par: un premier cadre 21 solidaire du bâti ou corps du missile 20, une partie centrale 22 peut tourner autour de l'axe Y compris dans le plan de figure, et un deuxième cadre 23 peut tourner autour d'un axe X perpendiculaire à Y et à l'axe optique Z, ou axe du gyroscope. La toupie 24 ou masse gyroscopique est entraînée en rotation autour de l'axe Z et le montage gyroscopique stabilise cette direction dans l'espace lorsque l'axe de référence lié à la structure portante, tel l'axe longitudinal du missile, s'écarte de la direction Z (sur la figure ces axes sont représentés confondus). La toupie comporte un rotor 24 et des bobinages statoriques 25 alimentés à partir d'un circuit annexe non figuré.

L'optique Cassegrain comporte le miroir principal 1 et le miroir secondaire formé dans la cellule 5a. Cette dernière est du type représenté à la fig. 1 c'est-à-dire avec la paroi 13 transparente. La focalisation après réflexion sur la cellule s'effectue à travers des éléments optiques complémentaires qui comportent une première lentille correctrice 26 et une deuxième lentille pour focaliser le rayonnement 27. Entre ces deux éléments optiques se trouve un atténuateur optique variable à cellule 28 fonctionnant par transmission. L'ensemble des éléments optiques allant du miroir secondaire jusqu'au détecteur se trouve représenté en détail sur les figs. 5 et 6. La toupie 24 comporte un aimant annulaire 30 qui subit les effets magnétiques engendrés par les bobines 25 dites de précession qui sont montées fixes sur un support mécanique 31 solidaire du corps 20 du missile. La toupie 24 est découplée du cadre 23 supportant l'ensemble optique atténuateur et détecteur par des roulements à billes 32. La cellule 5a est supportée par des bras 33 et un cache conique 34. Le découplage mécanique entre les éléments 21 et 22 s'effectue également avec des roulements à billes 35; il en est de même pour les découplages entre les éléments 22 et 23 mais dans ce dernier cas ils ne sont pas visibles sur la figure. L'arbre 21 est creux pour laisser le passage aux fils de connexion divers aboutissant d'une part, au dispositif détecteur et d'autre part, aux cellules 5a et 28, ces fils étant connectés en aval vers des circuits électroniques correspondants. Ces connexions comportent en particulier la sortie vidéo du dispositif détecteur, l'alimentation par tout ou rien de la cellule réflectrice 5a, et l'alimentation variable de la cellule atténuatrice 28 à partir d'une boucle d'asservissement en fonction de l'amplitude du signal vidéo; les autres connexions sont destinées à l'exploitation du signal vidéo et aux alimentations continues et synchronisations nécessaires au dispositif détecteur 3.

Les figs. 5 et 6 montrent de manière plus détaillée l'ensemble optique allant du miroir secondaire 5a au détecteur 3. La cellule atténuatrice 28 est constituée de manière analogue à celle de la fig. 3c à l'exception que la contre-électrode 40 est disposée dans la zone centrale étant donné que cette zone ne participe pas dans le montage Cassegrain à la propagation du rayonnement optique utile. En vis à vis de la contre-électrode mais du côté de l'électrode 12 se trouve déposé un isolant opaque 41 également dans la zone centrale qui constitue un masque et évite le dépôt du métal 2, ce dépôt n'ayant pas d'utilité dans la zone centrale. Le circuit 42 constitue la boucle d'asservissement de la cellule atténuatrice et produit une tension d'alimentation en fonction de l'amplitude moyenne du signal vidéo en sorte que celui-ci présente une dynamique suffisante pour l'exploitation. La correction automatique de sensibilité résulte de l'épaisseur variable du dépôt métallique 2 qui crée une transmission variable. On notera également sur l'optique correctrice de champ 26 un dépôt 43 dans la partie centrale destiné à arrêter le rayonnement parasite résiduel résultant de la première réflexion du rayonnement lumineux R1 sur la face externe de la paroi 11. Ce dépôt 43 forme un diaphragme d'arrêt pour le rayonnement R3 et ne perturbe pas le fonctionnement puisqu'il est en dehors de la transmission du rayonnement utile R4 vers le détecteur.

Sur les fig. 3 et fig. 5 la cuve 5a à été représentée avec le fond arrière transparent mais il va de soi qu'une version avec fond opaque et concave comme représentée sur la fig. 2 est possible.

Dans une application à un autodirecteur de missile, le fonctionnement s'effectuera d'abord en grand champ pour l'acquisition de la cible puis il passera en petit champ y subsistant jusqu'à la fin de l'opération; il n'est donc pas nécessaire de prévoir le passage petit champ à grand champ. Par ailleurs, dans la version réfléchissante selon la fig. 2, le dépôt électrolytique de métal 2 ne procure qu'un taux de réflexion limité, ceci pour des considérations d'ordre technologique et de faisabilité actuelle. En conséquence, il est envisagé pour ce type d'application et avec la version cuve réfléchissante d'effectuer, de préférence, un dépôt préalable d'une couche métallique 2 ce qui procurera un coefficient de réflexion très élevé en fonctionnement grand champ. Au cours du vol du missile, après acquisition de la cible en grand champ, le passage en petit champ est produit par dissolution de métal prédéposé, par électrolyse sous l'effet du passage du courant électrique. Le système n'est pas reversible avec les mêmes performances du point de vue réflexion en grand champ mais ceci n'est pas gênant pour un autodirecteur de missile puisque celui-ci doit rester en petit champ jusqu'à l'impact final.

Le dispositif selon la fig. 4 comporte deux cuves électrolytiques ce qui procure des avantages étant donné que la première cuve 5a selon l'invention permet le changement de champ de vision et la seconde cuve, permet de réaliser automatiquement la régulation du niveau de lumière sur le détecteur. Pour une applicaton à un autodirecteur de missile ce montage est particulièrement intéressant du fait de l'aspect entièrement statique des éléments mis en jeu (pas de déplacement significatif de masse matérielle), et la cellule électrolytique 5a permet d'avoir une commutation du champ de vision sur un autodirecteur stabilisé par effet gyroscopique direct.

Dans un grand nombre de dispositifs de guidage (guidage de missile, pointage de laser, pointage d'armement divers: canons, roquettes, etc.), il est nécessaire de disposer d'une caméra télévision de prises de vues ayant au moins deux champs de vision, un grand champ pour détecter la cible et un petit champ pour en effectuer la poursuite fine. L'invention appliquée à ce type de dispositif permet de réduire la complexité, le volume, le poids et le coût ce qui est appréciable pour des équipements portables et susceptibles d'être fabriqués en grande série.

La bande spectrale d'exploitation est limitée à celle de la cuve électrolytique, c'est-à-dire aux carractéristiques correspondantes de l'électrolyte. Cette bande spectrale peut couvrir le visible et le proche infrarouge, ce qui permet d'utiliser la majorité des dispositifs détecteurs existants, qu'il s'agisse de tubes ou de détecteurs solides du type dispositif à transfert de charge (ou circuit CCD, Charge Coupled Device en terminologie anglo-saxonne).

## Revendications

1. Optique bifocale utilisant une première optique de focalisation composée de deux miroirs courbes de même axe optique (Z), un premier miroir concave (1) percé dans sa partie centrale et un deuxième miroir (2), pour réfléchir successivement le rayonnement lumineux reçu, l'un des miroirs étant aménagé avec un élément (5) commandé par un signal électrique (VC) pour faire varier sa distance focale, et des moyens d'alimentation en courant continu (4) pour produire et modifier ledit signal de commande, ladite optique bifocale étant caractérisée en ce que ledit élément est constitué par une cellule électrolytique (5, 5a), qui présente successivement selon le sens du trajet axial renvoyé par le premier miroir, une première paroi transparente (11) dont la face externe est orientée du côté du premier miroir (1), une couche conductrice transparente (12) qui recouvre la face interne de la première paroi et qui forme une première électrode, un électrolyte (10) contenant des ions métalliques, une deuxième électrode (14) et une deuxième paroi (13), ladite deuxième électrode étant de forme annulaire, centrée sur l'axe optique et appliquée sur la face interne de la deuxième paroi, lesdites électrodes étant reliées aux moyens d'alimentation en courant continu (4) qui délivrent ledit signal avec un signe donné ou avec le signe inverse pour produire deux états de fonctionnement de la cellule, un premier état pour lequel un dépôt métallique se produit sur la première électrode (12) et forme ledit second miroir lequel constitue alors un montage Cassegrain avec le premier miroir concave et forme ladite première optique de focalisation ayant une première longueur focale, et un deuxième état de fonctionnement pour lequel ledit dépôt métallique est dissout de manière à obtenir une deuxième optique de focalisation qui présente une deuxième longueur focale (F2) différente de la première (F1) et telle que le plan de focalisation coïncide avec celui de la première optique de focalisation.

2. Optique bifocale selon la revendication 1, caractérisée en ce que la deuxième paroi (13) est transparente et la deuxième optique de focalisation est constituée par la (5) cellule seule qui est traversée totalement dans ledit deuxième état de fonctionnement par le rayonnement qui pénètre par la face externe de la deuxième paroi (13) et qui ressort par la face externe de la première paroi (11) pour aller se focaliser dans le plan focal commun.

3. Optique bifocale selon la revendication 2, caractérisée en ce qu'au moins l'une des parois (11, 13) présente une face courbe pour que la cellule constitue dans ledit deuxième état de fonctionnement une lentille convergente.

4. Optique bifocale selon la revendication 2, caractérisée en ce que la cellule a des parois (11, 13) planes et qui sont associées avec une optique convergente annexe (15) pour produire ladite deuxième optique de focalisation.

5. Optique bifocale selon la revendication 1, caractérisée en ce que la seconde paroi (13) est en matériau opaque et est traitée réfléchissante sur la partie de sa face interne non recouverte par ladite deuxième électrode (14) annulaire, cette partie étant en contact l'électrolyte (10) en sorte de constituer un troisième miroir centré sur l'axe pour réfléchir, dans ledit deuxième état de fonctionnement, le rayonnement de réception provenant du premier miroir concave (1) et ayant pénétré dans la cellule à travers la première paroi (11), la première électrode (12) et l'électrolyte (10), afin de le renvoyer en retraversant les mêmes éléments de la cellule vers le plan de focalisation (3), ledit troisième miroir et ledit premier miroir (1) constituant ladite seconde optique de focalisation qui forme également un montage Cassegrain.

6. Optique bifocale selon la revendication 5, caractérisée en ce que les parois (11, 13) de la cellule présentent des faces internes courbes, en sorte que pour chaque état de fonctionnement de la cellule on obtient un miroir convexe, ledit miroir convexe étant produit dans le premier état par ledit dépôt métallique, ledit miroir convexe étant produit dans le deuxième état par ladite face interne métallisée de la seconde paroi.

7. Optique bifocale selon la revendication 5 ou 6, caractérisée en ce que la celule comporte un dépôt métallique effectué préalablement sur la première électrode (12) pour constituer ledit deuxième miroir dès l'instant initial de fonctionnement pour une phase opérationnelle initiale correspondant audit premier état.

8. Utilisation d'une optique bifocale selon l'une quelconque des revendications précédentes comme optique réceptrice dans un appareil détecteur d'image vidéofréquence pour former l'image de la scène observée sur le plan photosensible d'un dispositif détecteur d'image (3) positionné audit plan focal, caractérisée en ce que l'optique réceptrice (1, 5a) et le détecteur (3) sont supportés par un montage gyroscopique (21 à 25) pour stabiliser ledit axe optique (Z) de réception.

9. Utilisation selon la revendication 8, caractérisée en ce que l'optique réceptrice comporte des éléments interposés entre la cellule (5a) et le détecteur d'image (3), ces éléments étant constitués par une optique correctrice de champ (26) ayant un dépôt (43) opaque dans sa partie centrale, une cellule électrolytique utilisée comme cellule atténuatrice (28) et commandée par une boucle de régulation (42) à partir du signal vidéo détecté (SV), et une lentille terminale de focalisation (27).

## Patentansprüche

1. Bifokale Optik unter Verwendung einer ersten Fokussieroptik, die zusammengesetzt ist aus zwei dieselbe optische Achse (Z) aufweisenden gekrümmten Spiegeln, eines ersten Konkavspiegels (1), der in seinem zentralen Teil durchbrochen ist, und eines zweiten Spiegels (2), um nacheinander die empfangene Lichtstrahlung zu reflektieren, wobei einer der Spiegel mit einem durch ein elektrisches Signal (VC) gesteuerten Element (5) versehen ist, um seine Brennweite zu verändern, und Gleichstromversorgungsmitteln (4), um das genannte Steuersignal zu erzeugen und zu verändern, wobei die bifokale Optik dadurch gekennzeichnet ist, dass das genannte Element gebildet ist aus einer elektrolytischen Zelle (5, 5a), welche nacheinander in Richtung des axialen, vom ersten Spiegel umgelenkten optischen Weges eine erste transparente Wand (11), deren Aussenfläche zur Seite des ersten Spiegels (1) orientiert ist, eine transparente leitfähige Schicht (12), welche die Innenfläche der ersten Wand bedeckt und eine erste Elektrode bildet, einen Elektrolyt (10), welcher Metallionen enthält, eine zweite Elektrode (14) und eine zweite Wand (13) aufweist, wobei die genannte zweite Elektrode ringförmig ist, auf die optische Achse zentriert und gegen die Innenfläche der zweiten Wand angelegt ist, wobei ferner die genannten Elektroden an die Gleichstromversorgungsmittel (4) angeschlossen sind, welche das genannte Signal mit gegebenem Vorzeichen oder entgegengesetztem Vorzeichen abgeben, um zwei Betriebszustände der Zelle zu erzeugen, nämlich einen ersten Zustand, bei welchem eine metallische Ablagerung auf der ersten Elektrode (12) entsteht und den genannten zweiten Spiegel bildet, der dann eine Cassegrain-Anordnung mit dem ersten Konkavspiegel bildet und die genannte erste Fokussieroptik mit einer ersten Brennweite herstellt, und einen zweiten Betriebszustand, bei welchem die genannte metallische Ablagerung aufgelöst ist, so dass eine zweite Fokussieroptik hergestellt ist, welche eine zweite Brennweite (F2) aufweist, die verschieden von der ersten (F1) ist, und dergestalt ist, dass die Fokussierebene mit der der ersten Fokussieroptik zusammenfällt.

2. Bifokale Optik nach Anspruch 1, dadurch gekennzeichnet, dass die zweite Wand (13) transparent und die zweite Fokussieroptik allein durch die Zelle (5) gebildet ist, welche in ihrem genannten zweiten Betriebszustand vollständig von der Strahlung durchquert wird, die über die Aussenfläche der zweiten Wand (13) eindringt und über die Aussenfläche der ersten Wand (11) austritt, um in der gemeinsamen Brennebene fokussiert zu werden.

3. Bifokale Optik nach Anspruch 2, dadurch gekennzeichnet, dass wenigstens eine der Wände (11, 13) eine gekrümmte Fläche aufweist, damit die Zelle in dem genannten zweiten Betriebszustand eine Konvergenzlinse bildet.

4. Bifokale Optik nach Anspruch 2, dadurch gekennzeichnet, dass die Zelle ebene Wände (11, 13) aufweist, die einer konvergierenden Hilfsoptik (15) zugeordnet sind, um die genannte zweite Fokussieroptik zu bilden.

5. Bifokale Optik nach Anspruch 1, dadurch gekennzeichnet, dass die zweite Wand (13) aus lichtundurchlässigem Material besteht und auf dem Teil ihrer Innenfläche, welcher von der zweiten, ringförmigen Elektrode (14) nicht bedeckt ist, reflektierend ausgerüstet ist, wobei dieser Teil mit dem Elektrolyt (10) in Berührung ist, um einen dritten Spiegel zu bilden, welcher auf die Achse zentriert ist, um in dem genannten zweiten Betriebszustand die Empfangsstrahlung vom ersten konkaven Spiegel (1), welche die Zelle über die erste Wand (11), die erste Elektrode (12) und den Elektrolyt (10) durchquert hat, zu reflektieren, um sie unter erneuter Durchquerung derselben Elemente der Zelle zur Brennebene (3) zurückzuwerfen, wobei der genannte dritte Spiegel und der genannte erste Spiegel (1) die genannte zweite Fokussieroptik bilden, welche ebenfalls eine Cassegrain-Anordnung bildet.

6. Bifokale Optik nach Anspruch 5, dadurch gekennzeichnet, dass die Wände (11, 13) der Zelle gekrümmte Innenflächen aufweisen, so dass für jeden Betriebszustand der Zelle ein konvexer Spiegel erhalten wird, wobei der genannte konvexe Spiegel im ersten Zustand durch die metallische Ablagerung gebildet wird und der genannte konvexe Spiegel im zweiten Zustand durch die genannte metallisierte Innenfläche der zweiten Wand gebildet ist.

7. Bifokale Optik nach Anspruch 5 oder 6, dadurch gekennzeichnet, dass die Zelle eine metallische Ablagerung aufweist, die zuvor auf der ersten Elektrode (12) aufgebracht ist, um den genannten zweiten Spiegel gleich beim ersten Betrieb in einer Anfangsbetriebsphase, welche dem ersten Zustand entspricht, herzustellen.

8. Verwendung einer bifokalen Optik nach einem der vorstehenden Ansprüche als Empfangsoptik in einem Videofrequenz-Bilddetektorgerät zur Erzeugung des Bildes der beobachteten Szene in der photoempfindlichen Ebene einer Bilddetektorvorrichtung (3), welche in der genannten Brennebene liegt, dadurch gekennzeichnet, dass die Empfangsoptik (1, 5a) und der Detektor (3) durch eine gyroskopische Anordnung (21 bis 25) getragen werden, um die genannte optische Empfangsachse (Z) zu stabilisieren.

9. Verwendung nach Anspruch 8, dadurch gekennzeichnet, dass die Empfangsoptik Elemente umfasst, welche zwischen die Zelle (5a) und den Bilddetektor (3) eingefügt sind, wobei diese Elemente gebildet sind aus einer Feldkorrekturoptik (26), welche eine lichtundurchlässige Ablagerung (43) in ihrem zentralen Teil aufweist, eine Elektrolytzelle, welche als Dämpfungszelle (28) verwendet wird und über eine Regelschleife (42) durch das erfasste Videosignal (SV) gesteuert wird, und aus einer abschliessenden Fokussierlinse (27).

## Claims

1. Bifocal optic using a first focusing optic composed of two curved mirrors having the same optical axis (Z), a first concave mirror (1) pierced in its central portion and a second mirror (2) for successively reflecting the received luminous radiation, one of the mirrors being provided with an element (5) controlled by an electric signal (VC) to vary its focal distance, and d.c. current supply means (4) for producing and modifying said control signal, said bifocal optic being characterized in that said element is formed by an electrolytic cell (5, 5a) having, successively in the direction of the axial optical path reflected by the first mirror, a first transparent wall (11) the outer face of which is oriented towards the first mirror (1), a transparent conductive layer (12) covering the inner face of the first wall and forming a first electrode, an electrolyte (10) containing metallic ions, a second electrode (14) and a second wall (13), said second electrode being of annular shape and centered on the optical axis and applied against the inner face of the second wall, said electrodes being connected to the d.c. supply means (4) supplying said signal with a given sign or with the inverted sign to produce two operative states of the cell, a first state wherein a metallic deposit is produced on the first electrode (12) to form said second mirror which then forms a Cassegrain system with the first concave mirror to form said first focusing optic having a first focal length, and a second operative state wherein said metallic deposit is dissolved in a manner to obtain a second focusing optic having a second focal length (F2) different from the first (F1) and such that the focusing plane is coincident with that of the first focusing optic.

2. Bifocal optic according to claim 1, characterized in that the second wall (13) is transparent and the second focusing optic is formed by the mere cell (5) which is totally traversed in said second operative state by the radiation penetrating through the outer face of the second wall (13) and leading through the outer face of the first wall (11) to be focused in the common focal plane.

3. Bifocal optic according to claim 2, characterized in that at least one of the walls (11, 13) has a curved face so that the cell forms a convergent lens in said second operative state.

4. Bifocal optic according to claim 2, characterized in that the cell has plane walls (11, 13) which are associated with an auxiliary convergent optic (15) to produce said second focusing optic.

5. Bifocal optic according to claim 1, characterized in that the second wall (13) is of an opaque material and is treated to be reflecting on the portion of its inner face which is not covered by said second annular electrode (14), this portion being in contact with the electrolyte (10) in a manner to form a third mirror centered on the axis to reflect, when in said second operative state, the radiation received from the first concave mirror (1) and having penetrated the cell through the first wall (11), the first electrode (12) and the electrolyte (10), in order to cause said radiation to be deflected towards the focusing plane (3) after having anew traversed the same elements of the cell, said third mirror and said first mirror (1) forming said second focusing optic which likewisie forms a Cassegrain system.

6. Bifocal optic according to claim 5, characterized in that the walls (11, 13) of the cell have curved inner faces so that for each operative state of the cell a convex mirror is obtained, said convex mirror being produced by said metallic deposit in the first state and said convex mirror being produced by said inner metallized face of the second wall in the second state.

7. Bifocal optic according to claim 5 or 6, characterized in that the cell comprises a metallic deposit which has been previously formed on the first electrode (12) to form said second mirror from the first moment of operation in an initial operational phase corresponding to said first state.

8. Use of a bifocal optic according to any of the preceding claims as a reception optic in a videofrequency image detector instrument for formung the image of the observed scene in the photosensitive plane of an image detector device (3) positioned in said focal plane, characterized in that the reception optic (1, 5a) and the detector (3) are supported by a gyroscopic system (21 to 25) for stabilzing said optical reception axis (Z).

9. Use according to claim 8, characterized in that the reception optic comprises elements interposed between the cell (5a) and the image detector (3), these elements being formed by a field correction optic (26) having an opaque deposit (23) in its central portion, and electrolytic cell used as an attenuation signal (28) and controlled through a control loop (42) by said detected video signal (SV), and a final focusing lens (27).

## FIG_1

$F_1$

$F_2$

1

3

Z

13

2

11

5

4

VC

ALIMENTATION
ET
COMMANDE

## FIG_2

$F_1$

$F_2$

3

(4)

13

14   2   12   11

# FIG_3.a    FIG_3.b    FIG_3.c

# FIG_5

# FIG_6

BOUCLE
DE
REGULATION

# FIG_4